# EUROPÄISCHE PATENTSCHRIFT

(11) **EP 1 110 778 B1**
(45) Veröffentlichungstag und Bekanntmachung des Hinweises auf die Patenterteilung: **06.02.2008**
(21) Anmeldenummer: 00127904.1
(22) Anmeldetag: 20.12.2000
(51) Int. Cl.: B60J 3/02

(54) **Halterung für eine Sonnenblende**
Support for mounting of a sun visor
Support pour fixation d'un pare-soleil

(30) Priorität: 21.12.1999 US 469054
(43) Veröffentlichungstag der Anmeldung: 27.06.2001
(73) Patentinhaber: TRW Automotive Electronics & Components GmbH, 78315 Radolfzell (DE)
(72) Erfinder: Kraus, Willibald, 67269 Grünstadt (DE)
(74) Vertreter: Degwert, Hartmut

(56) Entgegenhaltungen:
- EP-A- 0 596 753
- EP-A- 0 691 230
- DE-A- 19 724 401
- DE-A- 19 750 252
- US-A- 5 567 098

## Beschreibung

Die vorliegende Erfindung betrifft eine Vorrichtung zum Haltern einer Sonnenblende in einem Fahrzeug.

Es ist bekannt, das freie Ende einer Fahrzeugsonnenblende mittels eines Halters zu haltern, der das freie Ende lösbar mit einer Dachbeplankung des Fahrzeugs verbindet. Es ist auch bekannt, den Halter unter Verwendung eines Einsteckverbinders mit der Dachbeplankung zu verbinden. Die bekannten Einsteckverbinder sind typischerweise Zapfen, die vom Halter separate Teile sind. Die Zapfen werden durch eine Öffnung in den Halter eingesetzt und verspannen ein Teil des Halters mit der Dachbeplankung, um den Halter mit dieser zu verbinden.

US 5,567,098 offenbart einen Sonnenblendenhalter, der durch einen Einsteckverbinder mit einer Dachbeplankung eines Fahrzeugs zu verbinden ist. Es sind zwei Schenkel vorgesehen, die sich durch eine Öffnung des Dachhimmels und der Dachbeplankung erstrecken, sowie ein Stift, der in einer vormontierten Position in einer ersten Lage ist, und zur Endmontage in eine zweite Position bewegt wird, in der er die Schenkel auseinanderdrückt.

Die vorliegende Erfindung bezieht sich auf eine Vorrichtung zum Haltern einer Sonnenblende in einem Fahrzeug mit einer Dachbeplankung und einem die Dachbeplankung bedeckenden Dachhimmel gemäß Anspruch 1.

Die Vorrichtung ist dadurch gekennzeichnet, daß ein Stift von einer ersten Position in eine zweite Position bewegbar ist, indem ein Teil der Sonnenblende von einem Körperabschnitt aufgenommen wird. Hierfür weist die Vorrichtung einen Hebelabschnitt mit einem ersten Ende auf, das scharnierartig mit dem Körperabschnitt verbunden ist und mit einem zweiten Ende, das mit dem Stift verbunden ist. Das Teil der Sonnenblende greift am Hebelabschnitt an und bringt diesen dazu, relativ zu dem Körperabschnitt zu verschwenken, so daß sich der Stift von der ersten Position in die zweite Position bewegt, wenn das Teil der Sonnenblende von dem Halter aufgenommen wird.

Vorzugsweise enthält die Vorrichtung einen Flansch, der sich von dem Körperabschnitt erstreckt und in eine Öffnung, die sich durch den Dachhimmel und die Dachbeplankung erstreckt, so einführbar ist, daß ein Abschnitt des Dachhimmels zwischen dem Flansch und dem Körperabschnitt eingeklemmt ist, um den Halter mit dem Dachhimmel zu verbinden. In einer bevorzugten Ausführungsform sind der Halter, der wenigstens eine Flansch, der Stift, die wenigstens zwei Schenkel und der Hebelabschnitt in einem Stück aus homogenem Material gebildet.

Die vorausgehenden und weitere Merkmale der Erfindung ergeben sich für den Fachmann bei Betrachtung der folgenden Beschreibung der Erfindung und der begleitenden Zeichnungen, in welchen:
Figur 1 eine schematische Ansicht einer in einem Fahrzeug angebrachten erfindungsgemäßen Sonnenblendenhalterung ist;
Figur 2 eine perspektivische Ansicht einer Sonnenblendenhalterung gemäß einer ersten Ausführungsform der vorliegenden Erfindung ist;
Figur 3 eine linke Seitenansicht der Sonnenblendenhalterung aus Figur 2 ist;
Figur 4 eine rechte Seitenansicht der Sonnenblendenhalterung aus Figur 2 ist;
Figur 5 eine Vorderansicht der Sonnenblendenhalterung aus Figur 2 ist;
Figur 6 eine Schnittansicht der Sonnenblendenhalterung entlang der Linie 6-6 in Figur 5 ist;
Figur 7 eine Schnittansicht der Sonnenblendenhalterung aus Figur 6 ist, in der Teile der Vorrichtung in verschiedenen Positionen gezeigt sind;
Figur 8 eine teilweise geschnittene Vorderansicht ist, in der der Einbau der Sonnenblendenhalterung in einen Fahrzeugdachhimmel dargestellt ist;
Figur 9 eine teilweise geschnittene Seitenansicht ist, in der der Einbau der Sonnenblendenhalterung in einen Fahrzeugdachhimmel dargestellt ist;
Figur 10 eine Draufsicht auf einen Fahrzeugdachhimmel ist;
Figur 11 eine Schnittansicht ist, in der der Einbau der Sonnenblendenhalterung in eine Fahrzeugdachbeplankung dargestellt ist;
Figur 12 eine Schnittansicht der Sonnenblendenhalterung aus Figur 11 ist, in der Teile der Vorrichtung in verschiedenen Positionen gezeigt sind;
Figur 13 eine Draufsicht auf eine Fahrzeugdachbeplankung ist;
Figur 14 eine Schnittansicht der Sonnenblendenhalterung aus Figur 11 ist, in der Teile der Vorrichtung in verschiedenen Positionen gezeigt sind; und
Figur 15 eine Schnittansicht ist, die eine Sonnenblendenhalterung gemäß einer zweiten Ausführungsform der vorliegenden Erfindung zeigt.

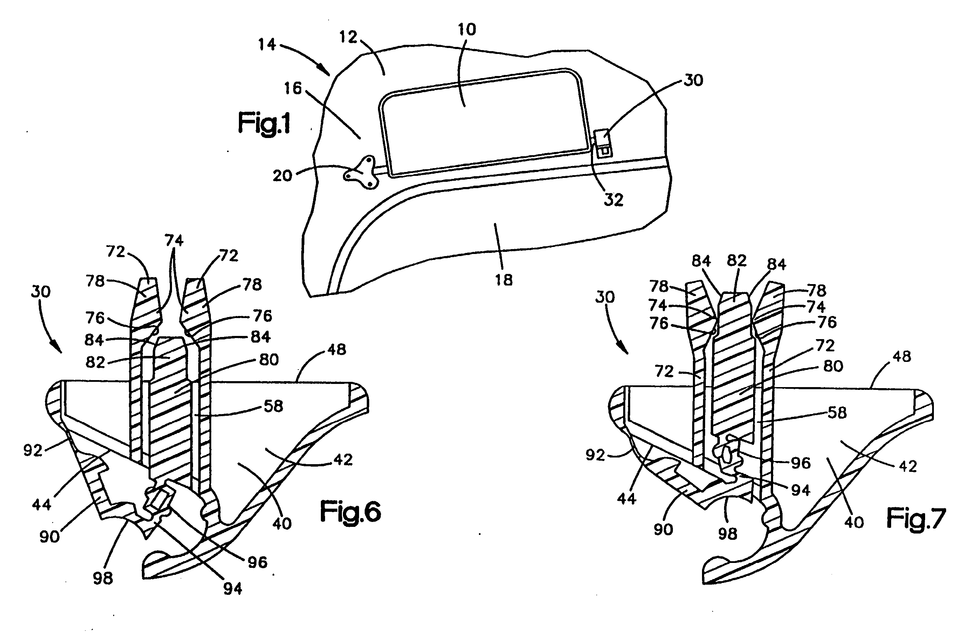

Figur 1 zeigt eine Fahrzeugsonnenblende 10, die an einer Dachstruktur 12 eines Fahrzeugs 14 befestigt ist, welches eine Dachbeplankung (nicht gezeigt) und einen Dachhimmel 16 umfaßt. Die Sonnenblende 10 ist in hochgeklappter Position gezeigt, über der Windschutzscheibe 18 des Fahrzeugs. Die Sonnenblende 10 umfaßt eine Schwenkauflage 20, welche die Sonnenblende 10 mit der Dachstruktur 12 verbindet. Durch die Auflage 20 kann die Sonnenblende 10 nach unten in eine abgesenkte Position (nicht gezeigt) verschwenkt werden, in der die Sonnenblende einen Teil der Windschutzscheibe 16 abdeckt. Mittels der Auflage 20 kann die Sonnenblende auch seitwärts in eine seitliche Position (nicht gezeigt) verschwenkt werden, in der die Sonnenblende einem Seitenfenster des Fahrzeugs 14 benachbart angeordnet ist.

Gemäß der vorliegenden Erfindung ist eine Sonnenblendenhalterung 30 an der Dachstruktur 12 des Fahrzeugs 14 befestigt. Die Halterung 30 nimmt einen Sonnenblendenzapfen 32 auf, der sich von der Sonnenblende 10 erstreckt. Die Halterung 30 verbindet die Sonnenblende lösbar mit der Dachstruktur 12 des Fahrzeugs. Der Sonnenblendenzapfen 32 kann sich in der Halterung 30 drehen, damit die Sonnenblende 10 zwischen hochgeklappter und abgesenkter Position verschwenkt werden kann. Die Halterung 30 gibt den Sonnenblendenzapfen 32 frei, damit die Sonnenblende 10 in die seitliche Stellung und von dieser weg verschwenkt werden kann.

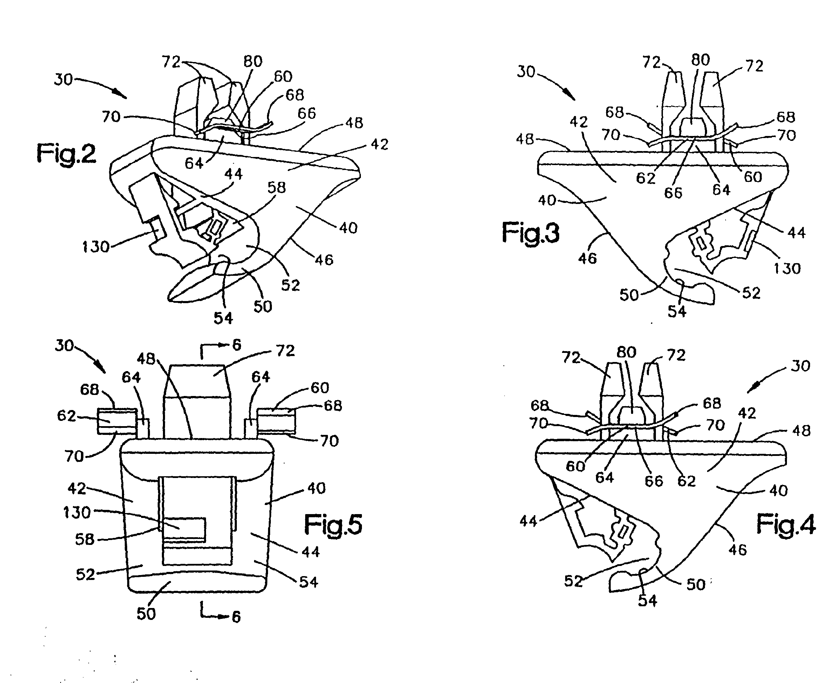

Wie in den Figuren 2 bis 4 dargestellt, umfaßt die Sonnenblendenhalterung 30 einen Halter 40, der den Sonnenblendenzapfen 32 (nicht gezeigt in den Figuren 2-4) aufnehmen kann. Bei der dargestellten Ausführungsform umfaßt der Halter 40 einen Körperabschnitt 42 mit einer Umfangsform, die eine vordere Fläche 44, eine hintere Fläche 46 und eine allgemein flache Grundfläche 48 bildet. Für den Fachmann ist offensichtlich, daß der Halter 40 eine beliebige Gesamtform haben kann, die ein gewünschtes ästhetisches Erscheinungsbild liefert.

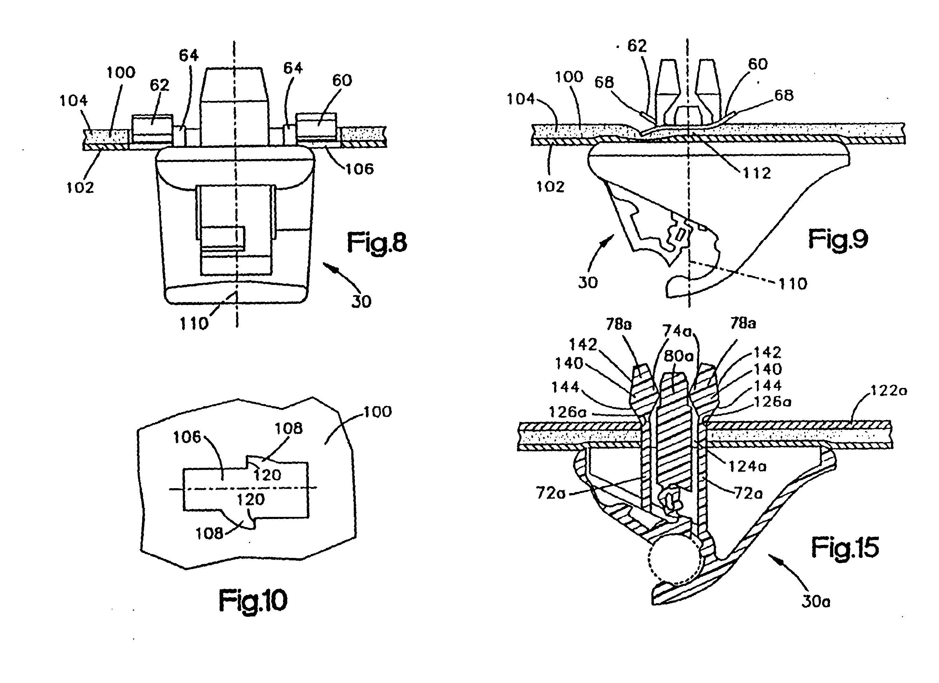

Der Halter 40 umfaßt ferner einen Zapfenaufnahmeabschnitt 50, der sich vom Körperabschnitt 42 in einer Richtung erstreckt, die der Grundfläche 44 allgemein gegenüberliegt. Der Zapfenaufnahmeabschnitt 50 bildet einen konkaven Zapfenaufnahmeraum 52, der durch eine Zapfenaufnahmefläche 54 definiert ist. Eine Stiftöffnung 58 (Figuren 2 und 5) erstreckt sich, von der vorderen Fläche 44 bis zur Grundfläche 48, durch den Körperabschnitt 42 des Halters 40.

Die Sonnenblendenhalterung 30 (Figuren 2-5) umfaßt auch einen ersten und zweiten Flansch 60 bzw. 62, die sich jeweils auf gegenüberliegenden Seiten der Stiftöffnung 58 von der Grundfläche 48 erstrecken. Die Flansche 60 und 62 haben Anschlagstücke 64, welche die Flansche mit der Grundfläche 48 verbinden. Unter Bildung eines Raumes zwischen den Flanschen und der Grundfläche liegen die Flansche 60 und 62 über Abschnitten der Grundfläche 44.

Die Flansche 60 und 62 umfassen jeweils einen Mittenabschnitt 66, einen nach oben geschwungenen Endabschnitt 68 und einen nach unten geschwungenen Endabschnitt 70. Die Mittenabschnitte 66 erstrecken sich allgemein parallel zur Grundfläche 48. Die nach oben geschwungenen Abschnitte 68 erstrecken sich vom Mittenabschnitt 66 von der Grundfläche 48 weg. Die nach unten geschwungenen Abschnitte 70 erstrecken sich vom Mittenabschnitt 66 in Richtung auf die Grundfläche 48.

Die ersten und zweiten Flansche 60 und 62 sind entlang der Stiftöffnung 58 so angeordnet, daß sie in entgegengesetzte Richtungen weisen. Der nach oben geschwungene Endabschnitt 68 des ersten Flansches 60 ist direkt neben der Stiftöffnung 58 gegenüber des nach unten geschwungenen Endabschnitts 70 des zweiten Flansches 62 angeordnet. Der nach unten geschwungene Endabschnitt 70 des ersten Flansches 60 ist direkt neben der Stiftöffnung 58 gegenüber des nach oben geschwungenen Endabschnitts 68 des zweiten Flansches 62 angeordnet.

Wie am besten in Figuren 6 und 7 zu sehen ist, umfaßt die Sonnenblendenhalterung 30 darüber hinaus ein Paar Schenkel 72, die voneinander beabstandet sind und sich von der vorderen Fläche 44 durch den Körperabschnitt 42 hindurch erstrecken. Die Schenkel 72 erstrecken sich senkrecht von der Grundfläche 48. Bei den dargestellten Ausführungsformen definieren die Abschnitte der Schenkel 72, die sich durch den Körperabschnitt 42 erstrecken, gegenüberliegende Seiten der Stiftöffnung 58.

Die Schenkel 72 haben jeweils einen Vorsprung 74, der sich in die Stiftöffnung 58 hinein in Richtung auf den gegenüberliegenden Schenkel erstreckt. Die Vorsprünge 74 bilden Schulterflächen 76 an jedem Schenkel 72. Jeder Schenkel 72 hat einen zulaufenden Endabschnitt 78, der sich von den Vorsprüngen 74 und weg von der Grundfläche 48 von breit zu schmal verengt.

Die Sonnenblendenhalterung 30 umfaßt auch einen Haltestift 80, der in der Stiftöffnung 58 zwischen den Schenkeln 72 angeordnet ist. Der Haltestift 80 ist in der Stiftöffnung 58 in einer zu den Schenkeln 72 parallelen Richtung von einer ersten Position (Figur 6) in eine zweite Position (Figur 7) bewegbar. Ein Endabschnitt 82 des Haltestifts 80 ragt zwischen den Schenkeln 72 über die Grundfläche 48 hinaus. Der Endabschnitt 82 des Haltestifts 80 ist zur Bildung von Schulterflächen 84 abgeschrägt.

Die Sonnenblendenhalterung 30 umfaßt auch einen Hebelabschnitt 90 mit einem ersten Ende 92 und einem gegenüberliegenden, zweiten Ende 94. Das erste Ende 92 des Hebelabschnitts 90 ist scharnierartig mit dem Körperabschnitt 42 des Halters 40 verbunden. Das zweite Ende 94 des Hebelabschnitts 90 ist mit dem Haltestift 80 durch einen Scharnierabschnitt 96 verbunden. Das zweite Ende 94 umfaßt eine Zapfenaufnahmefläche 98. Der Hebelabschnitt 90 ist von einer ersten Position (Figur 6), in der er einen spitzen Winkel mit der vorderen Fläche 44 des Körperabschnitts 42 bildet, in eine zweite Position (Figur 7) bewegbar, in der er im wesentlichen parallel zur vorderen Fläche liegt. Wie in Figuren 6 und 7 dargestellt, ist der Haltestift 80 in der Stiftöffnung 58 bewegbar, wenn sich der Hebelabschnitt 90 von der ersten Position in die zweite Position bewegt und umgekehrt.

Die Sonnenblendenhalterung 30 ist aus einem Stück eines homogenen Materials gebildet. Das Material kann jedes geeignete Kunststoff- oder Elastomermaterial sein, das spritzbar und von allgemein nachgiebiger Qualität ist. Wie in den Figuren 2-7 dargestellt, sind der Halter 40, die Flansche 60 und 62, die Schenkel 72, der Haltestift 80, der Hebelabschnitt 90 und der Scharnierabschnitt 96 alle Bestandteil eines Stücks aus homogenem Material.

Die Sonnenblendenhalterung 30 ist zur Montage an einem Fahrzeugdachhimmel ausgelegt, vor dessen Einbau in das Fahrzeug. Wie in den Figuren 8 und 9 dargestellt, ist die Halterung 30 mit einem Dachhimmel 100 verbunden, der eine Außenlage 102, wie zum Beispiel ein Gewebe, und eine Innenlage 104, wie zum Beispiel eine Schaumfüllung umfaßt. Für den Fachmann versteht es sich jedoch von selbst, daß der Dachhimmel 100 andersartige Ausgestaltungen haben kann. Beispielsweise könnte der Dachhimmel 100 nur eine einzige oder auch mehr als zwei Lagen umfassen. Der Dachhimmel 100 kann auch aus unterschiedlichen Materialien gebildet sein.

Wie in Figur 8 dargestellt, wird die Sonnenblendenhalterung 30 zuerst in einen Durchbruch 106 des Dachhimmels 100 eingesetzt. Wie in Figur 10 dargestellt, ist der Durchbruch 106 von allgemein rechteckiger Form und umfaßt ein Paar bogenförmiger Ausnehmungen 108 auf gegenüberliegenden Seiten des Durchbruchs. Die rechteckigen Abmessungen des Durchbruchs 106 sind derart, daß die Flansche 60 und 62 (Figur 8) und die Schenkel 72 durch den Durchbruch eingeführt werden können.

Wenn die Sonnenblendenhalterung 30 in dem Durchbruch 106 des Dachhimmels 100 derart positioniert ist, daß sich die Flansche 60 und 62 durch den Durchbruch erstrecken, wird die Halterung um eine Achse 110 gedreht, um sie am Dachhimmel zu fixieren. Bei Drehung der Halterung 30 um die Achse 110 wird der Dachhimmel 100 (Figur 9) zwischen den Flanschen 60 und 62 und der Grundfläche 48 des Halters 40 eingeklemmt. Die Flansche 60 und 62 sind so angeordnet, daß bei Drehung der Halterung 30 zuerst die nach oben geschwungenen Endabschnitte 68 der Flansche am Dachhimmel 100 angreifen. Die nach unten geschwungenen Endabschnitte 70 und die Mittenabschnitte 66 der Flansche 60 und 62 klemmen die Abschnitte 112 des Dachhimmels 100 zwischen den Flanschen und der Grundfläche 48 ein.

Bei Drehung der Halterung 30 in dem Durchbruch 106 bewegen sich die Anschlagstücke 64 (Figur 8) in einer gekrümmten Bahn in die bogenförmigen Ausnehmungen 108 (Figur 10). Die Ausnehmungen 108 sind so ausgebildet, daß die gekrümmte Bahn, entlang der sich die Anschlagstücke 64 (Figur 8) bewegen, mit der gekrümmten Form der Ausnehmungen übereinstimmt. Wenn die Anschlagstücke 64 entsprechende Endwandbereiche 120 (Figur 10) der Ausnehmungen 108 erreichen, ist eine weitere Drehbewegung der Halterung 30 durch die Endwandbereiche verhindert. Die Ausrichtung des Durchbruchs 106 am Dachhimmel 100 trägt somit dazu bei, daß die Halterung 30 (Figuren 8 und 9) in einer gewünschten Position in Bezug auf den Dachhimmel an diesem befestigt werden kann.

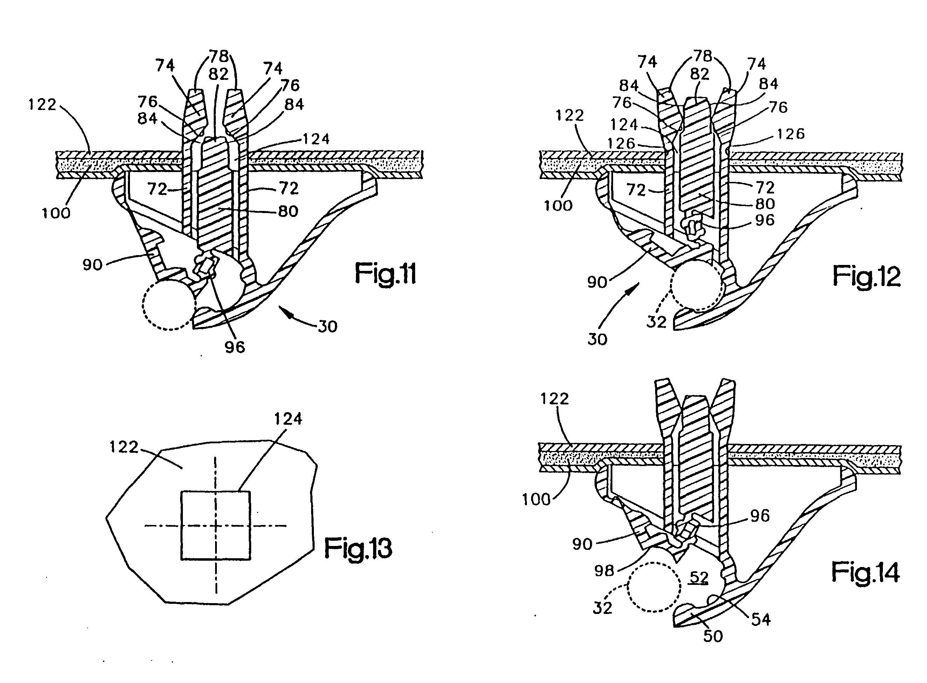

Sobald die Sonnenblendenhalterung 30 mit dem Dachhimmel 100 verbunden ist, können die Halterung und der Dachhimmel in einem Fahrzeug (nicht gezeigt) eingebaut werden. Wie in Figuren 11 und 12 dargestellt, sind der Dachhimmel 100 und die befestigte Halterung 30 derart positioniert, daß der Dachhimmel eine Dachbeplankung 122 des Fahrzeugs bedeckt. Die Dachbeplankung 122 bildet einen Teil der Fahrzeugdachstruktur und ist aus einem allgemein steifen Material wie beispielsweise Blech gebildet. Der Dachhimmel 100 kann durch bekannte Mittel mit der Dachbeplankung verbunden werden, zum Beispiel mittels Schrauben. Die Schenkel 72 der Halterung 30 erstrecken sich durch eine Befestigungsöffnung 124, die sich durch die Dachbeplankung 122 erstreckt. Wie in Figur 13 dargestellt, ist die Befestigungsöffnung 124 von rechteckiger Form und hat Abmessungen, die einen engen Sitz mit den Außenabmessungen der Schenkel 72 liefern (Figuren 11 und 12).

Wenn die Sonnenblendenhalterung 30 und der Dachhimmel 100 zunächst im Fahrzeug eingebaut werden, verbleiben der Hebelabschnitt 90 und der Haltestift 80 in der ersten Position. Dies ist in Figur 11 gezeigt. Wenn die Vorrichtung 30 eingebaut wird, trägt die zulaufende Form der Endabschnitte 78 der Schenkel 72 dazu bei, die Schenkel durch die Befestigungsöffnung 124 zu führen. Sobald sich die Halterung 30 in einer Lage befindet, in der sich die Schenkel 72 durch die Befestigungsöffnung 124 erstrecken, werden der Hebelabschnitt 90 und der Haltestift 80 in die zweite Position bewegt, um die Halterung 30 an der Dachbeplankung 122 zu fixieren. Dies ist in Figur 12 gezeigt.

Der Hebelabschnitt 90 und der Haltestift 80 werden in die zweite Position bewegt, indem auf den Hebelabschnitt eine Kraft aufgebracht wird, die ihn um das erste Ende 92 schwenken läßt. Bei der dargestellten Ausführungsform wird die Kraft durch den Sonnenblendenzapfen 32 aufgebracht. Die Kraft kann auf den Hebelabschnitt 90 jedoch auf verschiedenste Art aufgebracht werden, beispielsweise durch die Verwendung eines Werkzeugs oder per Hand. Der Scharnierabschnitt 96 übersetzt die radiale Bewegung des Hebelabschnitts 90 in eine lineare Bewegung des Haltestifts 80. Wenn die Kraft auf den Hebelabschnitt 90 aufgebracht wird, biegt sich der Scharnierabschnitt 96 in einen in Figur 12 gezeigten ausgelenkten Zustand. Wird die Kraft vom Hebelabschnitt 90 wieder weggenommen, bringt die Elastizität des zur Konstruktion des Scharnierabschnitts 96 verwendeten Materials den Scharnierabschnitt dazu, wieder seine ursprüngliche Form anzunehmen.

Wenn sich der Haltestift 80 und der Hebelabschnitt 90 von der in Figur 11 gezeigten ersten Position in die in Figur 12 gezeigte zweite Position bewegen, greifen die Schulterflächen 84 an den Endabschnitten 82 des Haltestifts 80 an den Schulterflächen 76 der Vorsprünge 74 an den Schenkeln 72 an. Wenn sich der Haltestift 80 in Richtung auf die zweite Position bewegt, drückt der Eingriff der jeweiligen Schulterflächen 84 und 76 die Schenkel 72 nach außen in einen ausgelenkten Zustand, in dem die Schenkel an Rändern 126 der Befestigungsöffnung 124 angreifen. Die ist am besten in Figur 12 zu sehen.

Wenn die Schenkel 72 vom Haltestift 80 nach außen gedrängt werden, beaufschlagen die Schenkel die Ränder 126 der Befestigungsöffnung 124 seitlich mit einer Kraft. Wenn sich der Haltestift 80 in die zweite Position bewegt, ist somit zwischen der Befestigungsöffnung 124, den Schenkeln 72 und dem Haltestift 80 ein Festsitz geschaffen. Der Festsitz schafft einen reibschlüssigen Eingriff zwischen den Schenkeln 72 und dem Haltestift 80, was dazu beiträgt, den Haltestift in der zweiten Position zu halten. Wenn die aufgebrachte Kraft vom Hebelabschnitt 90 wieder weggenommen wird, verbleiben somit die Schenkel 72 in dem ausgelenkten Zustand, wodurch die Sonnenblendenhalterung 30 an der Dachbeplankung 122 fixiert ist.

Wie in Figur 14 dargestellt, ist der Haltestift 80 in der zweiten Position gehalten und der Hebelabschnitt 90 mittels des Scharnierabschnitts 96 in Richtung auf die erste Position vorgespannt, wenn die Sonnenblendenhalterung 30 mit dem Dachhimmel 100 und der Dachbeplankung 122 verbunden ist. Dies führt dazu, daß der Abstand zwischen der Zapfenaufnahmefläche 98 des Hebelabschnitts 90 und der Zapfenaufnahmefläche 54 des Zapfenaufnahmeraumes 52 kleiner als der Durchmesser des Sonnenblendenzapfens 32 ist. Somit wird also, wenn der Sonnenblendenzapfen 32 in den Zapfenaufnahmeraum 52 eingeführt wird, der Hebelabschnitt 90 in Richtung auf die zweite Position bewegt, gegen die Vorspannung des Scharnierabschnitts 96. Dies sorgt beim Einsetzen des Sonnenblendenzapfens 32 in den Zapfenaufnahmeraum 52 für ein gedämpftes "Gefühl".

Wenn der Sonnenblendenzapfen 32 in den Zapfenaufnahmeraum 52 eingeführt wird, spannt der Scharnierabschnitt 96 den Hebelabschnitt 90 gegen den Sonnenblendenzapfen 32 vor und trägt dazu bei, den Sonnenblendenzapfen in dem Zapfenaufnahmeraum zu fixieren. Beim Herausnehmen des Sonnenblendenzapfens 32 aus dem Zapfenaufnahmeraum 52 wird der Hebelabschnitt 90 gegen die Vorspannung des Scharnierabschnitts 96 bewegt, um den Sonnenblendenzapfen 32 freizugeben. Wenn der Sonnenblendenzapfen 32 entfernt wird, erzeugt die Vorspannung des Scharnierabschnitts 96 ein gedämpftes "Gefühl".

Es kann erwünscht sein, die Sonnenblendenhalterung 30 von der Fahrzeugdachstruktur zu entfernen bzw. abzubauen. Hierfür muß der Haltestift 80 in die erste Position (Figur 11) bewegt werden, damit die Schenkel 72 aus der Befestigungsöffnung 124 entfernt werden können. Der Hebelabschnitt 90 umfaßt eine Werkzeugnut 130 (Figur 2, 3 und 5), in die ein Werkzeug (nicht gezeigt), zum Beispiel ein Schraubenzieher, eingesetzt werden kann, um den Hebelabschnitt herauszuhebeln und somit den Haltestift 80 in Richtung auf die erste Position zu bewegen.

Ein zweites Ausführungsbeispiel der Erfindung ist in Figur 15 gezeigt. Die zweite Ausführungsform der Erfindung ähnelt der in den Figuren 1-14 dargestellten ersten Ausführungsform. Demgemäß werden in Figur 15 zur Kennzeichnung ähnlicher Teile Bezugszeichen verwendet, die denen der Figuren 1-14 ähnlich sind, wobei zur Vermeidung von Verwirrung den Bezugszeichen der Figur 15 ein Suffix "a" zugeordnet ist.

Die Sonnenblendenhalterung 30a (Figur 15) der zweiten Ausführungsform entspricht der Sonnenblendenhalterung 30 (Figur 1 bis 14), mit der Ausnahme, daß die Endabschnitte 78a der Schenkel 72a (Figur 15) anders ausgebildet sind als die Endabschnitte 78 der Schenkel 72 (Figuren 1-14). Insbesondere umfassen die Endabschnitte 78a der Schenkel 72a von Figur 15 Vorsprünge 140, die sich von den Schenkeln in einer Richtung entgegen den Vorsprüngen 74a erstrecken.

Jeder der Vorsprünge 140 bildet eine Führungsfläche 142 und eine Haltefläche 144 an den Endabschnitten 78a der Schenkel 72a aus. Wenn die Schenkel 72a durch die Befestigungsöffnung 124a in der Dachbeplankung 122a eingeführt werden, greifen die Führungsflächen 142 an den Rändern 126a der Befestigungsöffnung an und verspannen die Schenkel gegeneinander. Dadurch können die Schenkel 72a in die Befestigungsöffnung 124a gelangen. Wie in Figur 15 gezeigt ist, fixieren die Halteflächen 144 der Vorsprünge 140 die Halterung 30a an der Dachbeplankung 122a, wenn der Haltestift 80a in der zweiten Position ist und die Schenkel 72a nach außen ausgelenkt sind. Die Halteflächen 144 greifen an der Dachbeplankung 122a an und tragen dazu bei, die Halterung 30a mit der Dachbeplankung zu verbinden. Die Halteflächen 144 tragen dazu bei, eine sichere Verbindung der Halterung 30a mit der Dachbeplankung 122a zu schaffen.

## Patentansprüche

1. Vorrichtung zum Haltern einer Sonnenblende (10) in einem Fahrzeug (14) mit einer Dachbeplankung (122; 122a) und einem Dachhimmel (100), der die Dachbeplankung (122; 122a) bedeckt, wobei die Vorrichtung enthält:
einen Halter (40; 40a) mit einem Körperabschnitt (42) zum Aufnehmen eines Teils der Sonnenblende (10);
wenigstens zwei Schenkel (72; 72a), die sich von dem Körperabschnitt (42) durch eine erste, sich durch den Dachhimmel (100) erstreckende Öffnung (106) und durch eine zweite, sich durch die Dachbeplankung (122; 122a) erstreckende Öffnung (124; 124a) erstrecken; und
einen Stift (80; 80a), der von einer ersten Position in eine zweite Position bewegbar ist, wobei zur Verbindung des Halters (40; 40a) mit der Dachbeplankung (122; 122a) der Stift (80; 80a) die wenigstens zwei Schenkel (72; 72a) in Richtung der Ränder (126; 126a) der zweiten Öffnung (124; 124a) drückt, wenn sich der Stift (80; 80a) in der zweiten Position befindet
**dadurch gekennzeichnet, daß** der Stift (80; 80a) von der ersten Position in die zweite Position bewegbar ist, indem das Teil der Sonnenblende (10) von dem Körperabschnitt (42) aufgenommen wird; und
daß die Vorrichtung weiterhin einen Hebelabschnitt (90) mit einem ersten Ende (92), das scharnierartig mit dem Körperabschnitt (42) verbunden ist, und einem zweiten Ende (94) enthält, das mit dem Stift (80; 80a) verbunden ist, wobei das Teil der Sonnenblende (10) am Hebelabschnitt (90) angreift und diesen dazu bringt, relativ zu dem Körperabschnitt (42) zu verschwenken, so daß sich der Stift (80; 80a) von der ersten Position in die zweite Position bewegt, wenn das Teil der Sonnenblende (10) von dem Halter (40; 40a) aufgenommen wird.

2. Vorrichtung nach Anspruch 1, **dadurch gekennzeichnet, daß** sie weiterhin wenigstens einen Flansch (60, 62) enthält, der sich von dem Körperabschnitt (42) erstreckt und durch die erste Öffnung (106) einführbar ist, wobei zur Verbindung des Halters (40; 40a) mit dem Dachhimmel (100) ein Abschnitt des Dachhimmels (100) zwischen dem wenigstens einen Flansch (60, 62) und dem Körperabschnitt (42) eingeklemmt ist.

3. Vorrichtung nach Anspruch 2, **dadurch gekennzeichnet, daß** der wenigstens eine Flansch (60; 62) einen nach oben geschwungenen Endabschnitt (68) und einen nach unten geschwungenen Endabschnitt (70) umfaßt.

4. Vorrichtung nach einem der vorhergehenden Ansprüche, **dadurch gekennzeichnet, daß** der Stift (80; 80a) mit dem Körperabschnitt (42) des Halters (40; 40a) verbunden ist.

5. Vorrichtung nach Anspruch 4, **dadurch gekennzeichnet, daß** der Körperabschnitt (42), der Stift (80; 80a) und die wenigstens zwei Schenkel (72; 72a) in einem Stück aus homogenem Material gebildet sind.

6. Vorrichtung nach einem der vorhergehenden Ansprüche, **dadurch gekennzeichnet, daß** der Stift (80; 80a) in einer sich durch den Körperabschnitt (42) erstreckenden Stiftöffnung (58) zwischen den Schenkeln (72; 72a) angeordnet ist.

7. Vorrichtung nach einem der vorhergehenden Ansprüche, **dadurch gekennzeichnet, daß** der Hebelabschnitt (90) ein Werkzeug zum Heraushebeln des Hebelabschnitts (90) aufnehmen kann, um den Stift (80; 80a) von der zweiten Position in die erste Position zu bewegen.

8. Vorrichtung nach einem der vorhergehenden Ansprüche, **dadurch gekennzeichnet, daß** der Hebelabschnitt (90) vorgespannt ist, um den Stift (80; 80a) in die erste Position zu bewegen.

9. Vorrichtung nach den Ansprüchen 2 und 5, **dadurch gekennzeichnet, daß** der Halter (40; 40a), der wenigstens eine Flansch (60, 62), der Stift (80; 80a), die wenigstens zwei Schenkel (72; 72a) und der Hebelabschnitt (90) in einem Stück aus homogenem Material gebildet sind.

10. Vorrichtung nach Anspruch 5 oder 9, **dadurch gekennzeichnet, daß** das eine Stück aus homogenem Material ein Stück aus gespritztem Kunststoffmaterial ist.

11. Vorrichtung nach einem der vorhergehenden Ansprüche, **dadurch gekennzeichnet, daß** die wenigstens zwei Schenkel (72; 72a) reibschlüssig am Stift (80; 80a) angreifen, wenn sich der Stift (80; 80a) in der zweiten Position befindet, um einer Bewegung des Stifts (80; 80a) in Richtung auf die erste Position Widerstand entgegenzusetzen.

12. Vorrichtung nach einem der vorhergehenden Ansprüche, **dadurch gekennzeichnet, daß** das Teil der Sonnenblende (10) ein Sonnenblendenzapfen (32) ist.

13. Vorrichtung nach einem der vorhergehenden Ansprüche, **dadurch gekennzeichnet, daß** die Schenkel (72; 72a) jeweils einen ersten Vorsprung (74; 74a), der eine Schulterfläche (76) bildet, und einen zulaufenden Endabschnitt (78; 78a) haben, der sich von dem Vorsprung (74; 74a) von breit zu schmal verengt.

14. Vorrichtung nach Anspruch 13, **dadurch gekennzeichnet, daß** die Endabschnitte (78a) der Schenkel (72a) jeweils einen zweiten Vorsprung (140) haben, der sich von dem Schenkel (72a) in einer Richtung entgegen dem Vorsprung (74a) erstreckt und eine Führungsfläche (142) und eine Haltefläche (144) an den Endabschnitten (82a) der Schenkel (72a) bildet.

## Claims

1. A device for supporting a visor (10) in a vehicle (14) having a roof panel (122; 122a) and a headliner (100) that covers the roof panel (122; 122a), the device comprising:
a clip (40; 40a) including a body portion (42) for receiving a part of the visor (10);
at least two legs (72; 72a) which extend from the body portion (42) through a first opening (106) extending through the headliner (100) and through a second opening (124; 124a) extending through the roof panel (122; 122a); and
a pin (80; 80a) which is movable from a first position to a second position, the pin (80; 80a) urging the at least two legs (72; 72a) towards the edges (126; 126a) of the second opening (124; 124a) to connect the clip (40; 40a) to the roof panel (122; 122a) when the pin (80; 80a) is in the second position,
**characterized in that** the pin (80; 80a) is movable from the first position to the second position by the part of the visor (10) being received by the body portion (42); and
**in that** the device further comprises a lever portion (90) having a first end (92) which is hingedly connected to the body portion (42), and a second end (94) which is connected to the pin (80; 80a), the part of the visor (10) engaging the lever portion (90) and causing it to pivot relative to the body portion (42) so that the pin (80; 80a) moves from the first position to the second position when the part of the visor (10) is received by the clip (40; 40a).

2. The device according to claim 1, **characterized in that** it further comprises at least one flange (60, 62) which extends from the body portion (42) and is insertable through the first opening (106), a portion of the headliner (100) being trapped between the at least one flange (60, 62) and the body portion (42) to connect the clip (40; 40a) to the headliner (100).

3. The device according to claim 2, **characterized in that** the at least one flange (60, 62) includes an end portion (68) curved upwards and an end portion (70) curved downwards.

4. The device according to any of the preceding claims, **characterized in that** the pin (80; 80a) is connected to the body portion (42) of the clip (40; 40a).

5. The device according to claim 4, **characterized in that** the body portion (42), the pin (80; 80a), and the at least two legs (72; 72a) are formed in one piece of a homogeneous material.

6. The device according to any of the preceding claims, **characterized in that** the pin (80; 80a) is disposed between the legs (72; 72a) in a pin aperture (58) extending through the body portion (42).

7. The device according to any of the preceding claims, **characterized in that** the lever portion (90) is adapted to receive a tool for prying the lever portion (90) to move the pin (80; 80a) from the second position to the first position.

8. The device according to any of the preceding claims, **characterized in that** the lever portion (90) is biased to move the pin (80; 80a) to the first position.

9. The device according to claims 2 and 5, **characterized in that** the clip (40; 40a), the at least one flange (60, 62), the pin (80; 80a), the at least two legs (72; 72a), and the lever portion (90) are formed in one piece of a homogeneous material.

10. The device according to claim 5 or 9, **characterized in that** the one piece of homogeneous material is a piece of an injection-molded plastic material.

11. The device according to any of the preceding claims, **characterized in that** the at least two legs (72; 72a) frictionally engage the pin (80; 80a) when the pin (80; 80a) is in the second position to resist movement of the pin (80; 80a) towards the first position.

12. The device according to any of the preceding claims, **characterized in that** the part of the visor (10) is a visor pin (32).

13. The device according to any of the preceding claims, **characterized in that** each of the legs (72; 72a) has a first projection (74; 74a) which forms a shoulder surface (76), and a tapered end portion (78; 78a) which tapers, from wide to narrow, from the projection (74; 74a).

14. The device according to claim 13, **characterized in that** each of the end portions (78a) of the legs (72a) has a second projection (140) which extends from the leg (72a) in a direction opposite to the projection (74a) and forms a guide surface (142) and a retaining surface (144) on the end portions (82a) of the legs (72a).

## Revendications

1. Dispositif de fixation d'un pare-soleil (10) dans un véhicule (14) comportant un revêtement de toit (122 ; 122a) et un ciel de toit (100) qui recouvre le revêtement de toit (122 ; 122a), le dispositif comportant :
un support (40 ; 40a) avec un tronçon de corps (42) pour recevoir une partie du pare-soleil (10) ;
au moins deux branches (72 ; 72a) qui s'étendent depuis le tronçon de corps (42) à travers une première ouverture (106) s'étendant à travers le ciel de toit (100) et à travers une deuxième ouverture (124 ; 124a) s'étendant à travers le revêtement de toit (122 ; 122a) ; et
une goupille (80 ; 80a) qui peut être déplacée depuis une première position jusque dans une deuxième position, et pour relier le support (40 ; 40a) au revêtement de toit (122 ; 122a), la goupille (80 ; 80a) presse lesdites au moins deux branches (72 ; 72a) en direction des bords (126 ; 126a) de la deuxième ouverture (124 ; 124a) lorsque la goupille (80 ; 80a) se trouve dans la deuxième position,
**caractérisé en ce que** la goupille (80 ; 80a) peut être déplacée depuis la première position jusque dans la deuxième position par le fait que la partie du pare-soleil (10) est reçue par le tronçon de corps (42) ; et
**en ce que** le dispositif comporte en outre un tronçon de levier (90) avec une première extrémité (92) qui est reliée à la manière d'une charnière avec le tronçon de corps (42), et une deuxième extrémité (94) qui est reliée à la goupille (80 ; 80a), la partie du pare-soleil (10) s'engageant sur le tronçon de levier (90) et amenant celui-ci à pivoter par rapport au tronçon de corps (42) de sorte que la goupille (80 ; 80a) se déplace depuis la première position jusque dans la deuxième position lorsque la partie du pare-soleil (10) est reçue par le support (40 ; 40a).

2. Dispositif selon la revendication 1, **caractérisé en ce qu'**il comporte en outre au moins une bride (60, 62) qui s'étend depuis le tronçon de corps (42) et qui peut être introduite à travers la première ouverture (106), et pour relier le support (40 ; 40a) au ciel de toit (100), un tronçon du ciel de toit (100) est serré entre ladite au moins une bride (60, 62) et le tronçon de corps (42).

3. Dispositif selon la revendication 2, **caractérisé en ce que** ladite au moins une bride (60 ; 62) comprend un tronçon d'extrémité (68) recourbé vers le haut et un tronçon d'extrémité (70) recourbé vers le bas.

4. Dispositif selon l'une des revendications précédentes, **caractérisé en ce que** la goupille (80 ; 80a) est reliée au tronçon de corps (42) du support (40 ; 40a).

5. Dispositif selon la revendication 4, **caractérisé en ce que** le tronçon de corps (42), la goupille (80 ; 80a) et lesdites au moins deux branches (72 ; 72a) sont formés d'un seul tenant en matériau homogène.

6. Dispositif selon l'une des revendications précédentes, **caractérisé en ce que** la goupille (80 ; 80a) est agencée entre les branches (72 ; 72a) dans une ouverture de goupille (58) s'étendant à travers le tronçon de corps (42).

7. Dispositif selon l'une des revendications précédentes, **caractérisé en ce que** le tronçon de levier (90) peut recevoir un outil pour faire sortir le tronçon de levier (90) afin de déplacer la goupille (80 ; 80a) depuis la deuxième position jusque dans la première position.

8. Dispositif selon l'une des revendications précédentes, **caractérisé en ce que** le tronçon de levier (90) est précontraint pour déplacer la goupille (80 ; 80a) jusque dans la première position.

9. Dispositif selon les revendications 2 et 5, **caractérisé en ce que** le support (40 ; 40a), ladite au moins une bride (60, 62), la goupille (80 ; 80a), lesdites au moins deux branches (72 ; 72a) et le tronçon de levier (90) sont formés d'un seul tenant en matériau homogène.

10. Dispositif selon la revendication 5 ou 9, **caractérisé en ce que** la pièce en matériau homogène est une pièce en matière plastique moulée par injection.

11. Dispositif selon l'une des revendications précédentes, **caractérisé en ce que** lesdites au moins deux branches (72 ; 72a) s'engagent par frottement sur la goupille (80 ; 80a) lorsque la goupille (80 ; 80a) se trouve dans la deuxième position, pour opposer une résistance à un mouvement de la goupille (80 ; 80a) en direction de la première position.

12. Dispositif selon l'une des revendications précédentes, **caractérisé en ce que** la partie du pare-soleil (10) est un tenon de pare-soleil (32).

13. Dispositif selon l'une des revendications précédentes, **caractérisé en ce que** les branches (72 ; 72a) ont chacune une première saillie (74 ; 74a), qui forme une surface d'épaulement (76), et un tronçon d'extrémité en effilement qui se rétrécit depuis la saillie (74 ; 74a) pour passer d'un état large à un état étroit.

14. Dispositif selon la revendication 13, **caractérisé en ce que** les tronçons d'extrémité (78a) des branches (72a) ont chacun une deuxième saillie (140) qui s'étend depuis la branche (72a) dans une direction opposée à la saillie (74a) et qui forme une surface de guidage (142) et une surface de retenue (144) aux tronçons d'extrémité (82a) des branches (72a).
